# EUROPÄISCHE PATENTANMELDUNG

(11) **EP 3 153 292 A1**
(43) Veröffentlichungstag der Anmeldung: **12.04.2017**
(21) Anmeldenummer: 16189149.4
(22) Anmeldetag: 16.09.2016
(51) Int. Cl.: B29C 35/08, B29C 70/38, B29C 35/02, B29C 65/02, B32B 38/00

(54) **BINDERAKTIVIERUNG MITTELS LEUCHTDIODEN BEI DER HERSTELLUNG VON FASERVERSTÄRKTEM KUNSTSTOFFLAMINAT**

(30) Priorität: 05.10.2015 DE 102015116837
(71) Anmelder: Airbus Defence and Space GmbH, 82024 Taufkirchen (DE)
(72) Erfinder: Orth, Tilman, 80469 München (DE); Engel, Franz, 81539 München (DE); Schlegel, Katharina, 80541 München (DE); Weimer, Christian Dr., 81539 München (DE)
(74) Vertreter: Isarpatent

(57) **Zusammenfassung**

Eine erfindungsgemäße Aktivierungsvorrichtung (100, 200, 400) dient einer Binderaktivierung beim Herstellen eines faserverstärkten Kunststofflaminats. Sie weist mindestens eine Leuchtdiode (110a, 110b, 110c, 210a, 210b, 310a, 310b, 310c, 410) zum Erwärmen eines Abschnitts (A) mindestens eines Faserhalbzeug-Bändchens (20, 20a, 20b, 20c) auf.

Ein erfindungsgemäßes Verfahren dient einem Herstellen eines faserverstärkten Kunststofflaminats. Es umfasst ein automatisiertes Verlegen mindestens eines Faserhalbzeug-Bändchens (20, 20a, 20b, 20c) auf einem Verlegungsuntergrund (30), ein Erwärmen mindestens eines Abschnitts (A) des Faserhalbzeug-Bändchens mittels einer oder mehrere Leuchtdiode/n (110a, 110b, 110c, 210a, 210b, 310a, 310b, 310c, 410) einer Aktivierungsvorrichtung (100, 200, 400) sowie ein Anpressen des erwärmten Abschnitts des Faserhalbzeug-Bändchens auf dem Verlegungsuntergrund (30).

## Beschreibung

Die Erfindung betrifft eine Aktivierungsvorrichtung zur Binderaktivierung beim Herstellen eines faserverstärkten Kunststofflaminats, eine Vorrichtung zum Herstellen eines faserverstärkten Kunststofflaminats und ein Verfahren zum Herstellen eines faserverstärkten Kunststofflaminats.

Faserverbundkunststoffe werden in vielen Bereichen eingesetzt. Beispielsweise kohlenstofffaserverstärkte Kunststoffe finden u.a. Verwendung in industriellen Bauteilen, in der Luft- und Raumtechnik und in Sportgeräten. Die Herstellung der entsprechenden Bauteile kann insbesondere automatische Schichtlegeprozesse umfassen. Mit Hilfe eines Legekopfes werden dabei trockene oder vorimprägnierte Fasern in schmalen Faserhalbzeug-Bändchen in mehreren Schichten in einem formgebenden Werkzeug verlegt. Dabei können dabei derzeit bis zu 32 derartige Faserhalbzeug-Bändchen gleichzeitig von einem Legekopf nebeneinander auf einen Verlegungsuntergrund gelegt werden, den z.B. ein formbildendes Werkzeug und/oder eine bereits verlegte Schicht bilden kann. Der Legekopf kann beim Verlegen automatisch Kurven fahren und dabei die Ablegegeschwindigkeit der einzelnen, nebeneinander geführten Faserhalbzeug-Bändchen der jeweiligen Bahnkrümmung anpassen. Auf diese Weise wird aus mehreren Lagen ein Bauteil aufgebaut.

Die abgelegten Faserhalbzeug-Bändchen können beispielsweise mit duromerem Matrixmaterial oder mit thermoplastischem Matrixmaterial vorimprägniert sein oder als trockene Fasern mit Binder verwendet werden.

Damit die Faserhalbzeug-Bändchen nach dem Ablegen nicht mehr verrutschen bzw. sich nicht verschieben, wird vorzugsweise ein enthaltenes Bindematerial durch eine Erwärmung aktiviert; die jeweils benötigte (Aktivierungs-)Temperatur ist dabei abhängig von dem verwendeten Matrixmaterial oder Binder. Durch die Erwärmung entwickeln die Faserhalbzeug-Bändchen eine Klebrigkeit, die sie an ihrer jeweiligen Ablegeposition anhaften lässt. Faserhalbzeug-Bändchen mit thermoplastischem Matrixmaterial können mit der richtigen Kombination aus Druck und Temperatur außerdem unmittelbar verfestigt werden.

Gemäß herkömmlichen Anwendungen wird die Erwärmung über Infrarotstrahler oder Laser erreicht, zuweilen wird auch Heißgas oder eine Kontaktleitung verwendet. Bei Faserhalbzeug-Bändchen mit duromerem Matrixmaterial werden insbesondere Infrarotheizungen eingesetzt, bei Faserhalbzeug-Bändchen mit thermoplastischem Matrixmaterial kommen häufig Laserheizungen zur Anwendung.

Die herkömmlichen Strahlungsheizungen weisen einige Nachteile auf. So haben Infrarotstrahler eine geringe Leistungsdichte, sind schlecht fokussiert und können nicht für jedes Band einzeln geregelt werden. Laser bieten zwar eine sehr hohe Leistungsdichte, ihre Verwendung bedeutet jedoch aufgrund ihrer hohen Leistung in größeren Produktionsanlagen ein erhebliches Sicherheitsrisiko. Heißgasfackeln sind schlecht regel- und messbar und zudem feuergefährlich, und Kontaktheizungen sind an Herstellungsanlagen für faserverstärkte Kunststofflaminate vorrichtungstechnisch aufwendig zu realisieren und daher meist nicht praktikabel.

Die vorliegende Erfindung hat die Aufgabe, eine Technik zur Herstellung eines faserverstärkten Kunststofflaminats bereitzustellen, mit der die genannten Nachteile vermieden werden.

Die Aufgabe wird gelöst durch eine Aktivierungsvorrichtung gemäß Anspruch 1, eine Vorrichtung zum Herstellen eines faserverstärkten Kunststofflaminats gemäß Anspruch 10 und ein Verfahren gemäß Anspruch 11. Vorteilhafte Ausführungsformen sind in den Unteransprüchen und der Beschreibung offenbart.

Eine erfindungsgemäße Aktivierungsvorrichtung dient einer Binderaktivierung beim Herstellen eines faserverstärkten Kunststofflaminats. Sie weist wenigstens eine Leuchtdiode zum Erwärmen eines Abschnitts mindestens eines Faserhalbzeug-Bändchens auf.

Ein erfindungsgemäßes Verfahren dient einem Herstellen eines faserverstärkten Kunststofflaminats und umfasst ein automatisiertes Verlegen mindestens eines Faserhalbzeug-Bändchens auf einem Verlegungsuntergrund, ein Erwärmen mindestens eines Abschnitts des Faserhalbzeug-Bändchens sowie ein Anpressen des erwärmten Abschnitts des Faserhalbzeug-Bändchens auf dem Verlegungsuntergrund. Das Erwärmen des Abschnitts des Faserhalbzeug-Bändchens erfolgt dabei mittels einer oder mehrerer Leuchtdiode/n einer Aktivierungsvorrichtung.

Eine erfindungsgemäße Vorrichtung zum Herstellen eines faserverstärkten Kunststofflaminats umfasst eine Zufuhreinrichtung (die z.B. eine Materialrolle und/oder eine Ablegeeinheit umfassen kann) zum Zuführen mindestens eines Faserhalbzeug-Bändchens auf einen Verlegungsuntergrund; insbesondere kann die Zufuhreinrichtung dazu eingerichtet sein, eine Mehrzahl an Faserhalbzeug-Bändchen im Wesentlichen gleichzeitig und/oder parallel dem Verlegungsuntergrund zuzuführen. Die Vorrichtung umfasst ferner eine erfindungsgemäße Aktivierungseinheit gemäß einer der in dieser Schrift genannten Ausführungsformen sowie ein Kompaktierelement (das z.B. als flächige Presse oder als Kompaktierrolle ausgebildet sein kann) zum Andrücken eines von der Aktivierungseinheit erwärmten Abschnitts des mindestens einen Faserhalbzeug-Bändchens an dem Verlegungsuntergrund. Das Zuführen des mindestens einen Faserhalbzeug-Bändchens durch die Zufuhreinrichtung erfolgt vorzugsweise automatisch. Insbesondere ist gemäß einer vorteilhaften Ausführungsvariante mindestens die Zufuhreinrichtung Teil eines Legekopfes einer automatischen Schichtlegeanlage.

Es versteht sich, dass der jeweilige Abschnitt, den zu erwärmen die Aktivierungsvorrichtung eingerichtet ist bzw. der (gemäß einem erfindungsgemäßen Verfahren) erwärmt wird, sich über die Zeit ändern kann, so dass also nacheinander (in kontinuierlicher Weiterführung oder in diskreten Intervallen) eine Mehrzahl an Abschnitten erwärmt werden kann, z.B. wenn die Aktivierungsvorrichtung entlang einem zugeführten Faserhalbzeug-Bändchen bewegt und/oder wenn ein zugeführtes Faserhalbzeug-Bändchen an der Aktivierungsvorrichtung vorbeigeleitet wird.

Das bzw. die Faserhalbzeug-Bändchen umfasst/umfassen vorzugsweise ein (vorimprägniertes oder trockenes, mit Binder angereichertes) kohlenstofffaserverstärktes Material oder bestehen sogar daraus. Der Verlegungsuntergrund kann beispielsweise ein Substrat und/oder eine früher verlegte Schicht und/oder ein formgebendes Werkzeug sein.

Eine erfindungsgemäße Aktivierungsvorrichtung bzw. ein erfindungsgemäßes Verfahren ermöglichen eine abschnittsweise Erwärmung eines Faserhalbzeug-Bändchens, die vorrichtungstechnisch mit wenig Aufwand zu realisieren ist. Die Erwärmung mittels Leuchtdiode(n) ist dabei besonders gut regelbar, so dass die jeweilige Erwärmung insbesondere lokalen Erfordernissen bei der Verlegung des/der Faserhalbzeug-Bändchen (die z.B. aus der räumlichen Gestaltung eines herzustellenden Bauteils aus faserverstärktem Kunststofflaminat resultieren können) angepasst werden kann. Auf diese Weise kann ein Bindermaterial in dem mindestens einen Faserhalbzeug-Bändchen aktiviert und so eine Klebrigkeit desselben bewirkt werden, die eine Verschiebung der verlegten Faserhalbzeug-Bändchen verhindert und so eine gute Qualität eines herzustellen faserverstärkten Kunststofflaminats sichert.

Gemäß einer vorteilhaften Ausführungsform umfasst eine erfindungsgemäße Aktivierungsvorrichtung eine Temperatur-Messvorrichtung zum Erfassen einer Temperatur des erwärmten Abschnitts und/oder der Aktivierungsvorrichtung (bzw. eines Teils oder Bereichs der Aktivierungsvorrichtung, beispielsweise der mindestens einen Leuchtdiode) und/oder eines erwärmten Verlegungsuntergrundes (insbesondere, wenn der Abschnitt des mindestens einen Faserhalbzeug-Bändchens auf diese Weise indirekt erwärmt wird; vorzugsweise erfolgt das Erfassen der Temperatur in diesem Falle, bevor der Abschnitt des Faserhalbzeug-Bändchens auf dem Verlegungsuntergrund abgelegt wird). Anlog umfasst ein erfindungsgemäßes Verfahren gemäß einer vorteilhaften Ausführungsvariante ein Erfassen einer Temperatur des erwärmten Abschnitts des Faserhalbzeug-Bändchens und/oder der Aktivierungsvorrichtung (bzw. eines Teils oder Bereiches davon, beispielsweise der mindestens einen Leuchtdiode) und/oder eines erwärmten Verlegungsuntergrundes (wobei das Erfassen in diesem Fall vorzugsweise erfolgt, bevor darauf der Abschnitt des Faserhalbzeug-Bändchens abgelegt wird).

Die Temperatur kann dabei direkt, insbesondere berührungslos über mindestens ein Pyrometer erfasst werden, oder indirekt, beispielsweise mittels mindestens eines Thermistors, der dazu eingerichtet ist, eine Aufheizung (z.B. der Leuchtdiode(n)) zu detektieren.

Eine derartige Temperaturmessung erlaubt eine Kontrolle der Erwärmung des mindestens einen Faserhalbzeug-Bändchens. Damit kann insbesondere eine Qualität des herzustellenden faserverstärkten Kunststofflaminats abgesichert werden.

Besonders bevorzugt ist eine Ausführungsform eines erfindungsgemäßen Verfahrens, bei der mehrere Faserhalbzeug-Bändchen gleichzeitig im Wesentlichen parallel auf dem Verlegungsuntergrund verlegt werden, deren Temperatur im erwärmten Abschnitt (einzeln oder in Gruppen mit mehreren Faserhalbzeug-Bändchen) separat erfasst wird (ggf. zusätzlich zu einer Temperatur der Aktivierungsvorrichtung und/oder eines erwärmten Verlegungsuntergrundes). Analog ist eine erfindungsgemäße Aktivierungsvorrichtung vorzugsweise dazu eingerichtet, mehrere gleichzeitig nebeneinander verlegte Faserhalbzeug-Bändchen in einem Abschnitt zu erwärmen, und ist die vorzugsweise umfasste Temperatur-Messvorrichtung dazu eingerichtet, für die mehreren Faserhalbzeug-Bändchen die Temperatur des erwärmten Abschnitts einzeln oder in Gruppen separat zu erfassen (ggf. zusätzlich zu einer Temperatur der Aktivierungsvorrichtung und/oder eines erwärmten Verlegungsuntergrundes).

Beispielsweise die Geometrie eines herzustellenden faserverstärkten Kunststofflaminats kann erfordern, dass parallel verlegte Faserhalbzeug-Bändchen unterschiedlich stark beansprucht (z.B. gedehnt) werden, z.B. wenn sie nebeneinander entlang einer Kurve oder Wölbung verlegt werden. In derartigen Fällen können unterschiedliche Temperaturen für die verschiedenen Faserhalbzeug-Bändchen für eine effiziente Binderaktivierung erforderlich sein, z.B. entsprechend der jeweiligen Beanspruchung und/oder Dicke eines Abschnitts. Die genannte Ausführungsform ermöglicht nun, die jeweils erreichte Temperatur für verschiedene Faserhalbzeug-Bändchen jeweils einzeln oder in Gruppen (die beispielsweise zwei oder mehr nebeneinanderliegende Faserhalbzeug-Bändchen umfassen können) separat zu erfassen und damit zu kontrollieren.

Die Leuchtdiode(n) kann/ können dazu eingerichtet sein, elektromagnetische Strahlung im sichtbaren und/oder unsichtbaren Wellenlängenbereich auszustrahlen. Sie kann/können dazu eingerichtet sein, ausschließlich im Dauerbetrieb, ausschließlich gepulst oder veränderlich (vorzugsweise wahlweise) im Dauerbetrieb oder gepulst betrieben zu werden. Gemäß einer Ausführungsform eines erfindungsgemäßen Verfahrens wird/werden die Leichtdiode(n) entsprechend ausschließlich im Dauerbetrieb, ausschließlich gepulst oder veränderlich betrieben.

Vorzugsweise ist die bzw. sind die Leuchtdiode(n) auf einer der mehreren Platinen aufgebracht (z.B. aufgelötet), die mindestens einen ebenen und/oder gekrümmten Bereich umfassen kann. Insbesondere kann damit eine Oberfläche der Aktivierungsvorrichtung mit Leuchtdiode(n) dem herzustellenden Kunststofflaminat angepasst sein. Diese Oberfläche der Aktivierungsvorrichtung mit Leuchtdiode(n) kann dann dem zu erwärmenden Abschnitt zugewandt werden (insbesondere dem Abschnitt, der danach von einem Kompaktierelement an den Verlegungsuntergrund gedrückt wird). So kann eine besonders günstige Erwärmung erzielt werden.

Die Leuchtdiode(n) umfassen vorzugsweise jeweils Halbleiterbauteile. Damit können kurze Ansprechzeiten und eine gute Regelbarkeit realisiert werden. Die Leuchtdiode(n) kann/können eine oder mehrere Hochleistungs-LED(s) umfassen bzw. sein, die z.B. als oberflächenmontierte Bauelemente ausgeführt sein können (für die in der Fachsprache auch die englische Bezeichnung "surface mounted device" (SMD) geläufig ist), oder die Leuchtdiode(n) kann/können mittels Durchsteckmontage (für die in der Fachsprache auch die englische Bezeichnung "through hole technology" (THT) verwendet wird) hergestellt sein. Alternativ oder zusätzlich kann die Aktivierungsvorrichtung eine oder mehrere faser- oder folienförmige Leuchtdiode(n) umfassen.

Die Aktivierungsvorrichtung mit der/den Leuchtdiode(n) kann einen Bereich umfassen, der von einem Kühlmedium durchströmt wird. So kann Verlustwärme der Leuchtdiode(n) abgeführt werden. Zur besseren Wärmeabfuhr kann die Aktivierungsvorrichtung alternativ oder zusätzlich auch einen Kühlkörper umfassen, der aus dem gleichen Material wie die Platine(n) besteht oder diese zumindest umfasst; ein derartiger Kühlkörper kann beispielsweise mittels eines additiven Verfahrens erzeugt worden sein. Mit ihm kann ein Wärmeübergang vermieden werden.

Die Aktivierungsvorrichtung kann eine oder mehrere Leuchtdioden umfassen, die dazu eingerichtet sind, auf einen abgelegten oder abzulegenden Abschnitt des mindestens einen Faserhalbzeug-Bändchens gerichtet zu werden und diesen so direkt bestrahlen bzw. erwärmen. Alternativ oder zusätzlich kann die Aktivierungsvorrichtung eine oder mehrere Leuchtdioden umfassen, die dazu eingerichtet sind, auf einen Bereich des Verlegungsuntergrundes gerichtet zu werden, dem das mindestens eine Faserhalbzeug-Bändchen erst noch zugeführt wird. Auf diese Weise kann die Aktivierungsvorrichtung dazu eingerichtet sein, den Abschnitt indirekt zu erwärmen, indem der Verlegungsuntergrund seine von der Aktivierungsvorrichtung erhaltene Wärme an das mindestens eine Faserhalbzeug-Bändchen weitergibt. Diese Ausführungsform hat zudem den Vorteil, dass auch ein Bindermaterial in einer ggf. früher verlegten Schicht von Faserhalbzeug im Verlegungsuntergrund aktiviert und wird und somit die Anhaftung des Abschnitts des Faserhalbzeug-Bändchens verstärkt.

Gemäß einer vorteilhaften Ausführungsvariante umfasst eine erfindungsgemäße Aktivierungsvorrichtung eine Steuerungs- und/oder Regelungseinheit für die Leuchtdiode/n; damit kann die Leuchtdiode bzw. können die Leuchtdioden vorzugweise bezüglich ihrer Leistung gesteuert bzw. geregelt werden.

Besonders bevorzugt ist eine Ausführungsform, bei der die Aktivierungsvorrichtung mehrere Leuchtdioden umfasst, die einzeln und/oder in Gruppen gesteuert bzw. geregelt werden können. Analog umfasst ein erfindungsgemäßes Verfahren vorzugsweise ein Steuern oder Regeln der Leuchtdiode/n, das im Falle von mehreren von der Aktivierungsvorrichtung umfassten Leuchtdioden einzeln und/oder gruppenweise erfolgen kann.

Eine derartige Steuerung der Leuchtdioden kann auf Grundlage vorab erstellter, vorzugsweise gespeicherter Material- und/oder Prozessparameter erfolgen, auf die die Steuerungs- bzw. Regelungseinheit der Aktivierungsvorrichtung vorzugsweise zugreifen kann.

Im Falle, dass die erfindungsgemäße Aktivierungsvorrichtung eine Regelungseinheit wie erwähnt umfasst, ist diese vorzugsweise dazu eingerichtet, eine Leistung der jeweiligen Leuchtdiode(n) auf Grundlage mindestens einer jeweiligen Temperatur zu regeln, beispielsweise einer Temperatur des erwärmten Abschnitts des mindestens einen Faserhalbzeug-Bändchens und/oder des erwärmten Verlegungsuntergrundes und/oder der Aktivierungsvorrichtung (bzw. eines Teils oder Bereiches der Aktivierungsvorrichtung, beispielsweise der mindestens einen Leuchtdiode), die wie oben erwähnt von einer Temperatur-Messvorrichtung erfasst worden sein kann; eine derartige Regelung umfasst vorzugsweise ein Vergleichen mindestens eines erfassten Wertes mit einem oder mehreren Sollwert(en) (der/die beispielsweise in einem Speicher der Regelungseinheit oder auf einem der Regelungseinheit zugänglichen Speichermedium abgelegt sein kann/können).

Mit Hilfe der Regelung können eine thermische Schädigung des verlegten Fasermaterials vermieden sowie eine präzise Erwärmung und damit Binderaktivierung genau entsprechend den jeweiligen Gegebenheiten und Erfordernissen erreicht und kontrolliert werden.

Insbesondere kann die Steuerungs- bzw. Regelungseinheit der Aktivierungsvorrichtung eine manuelle und/oder automatische Zu- bzw. Abschaltung einer oder mehrere Leuchtdioden jeweils für einzelne Faserhalbzeug-Bändchen bereitstellen bzw. ermöglichen.

Eine Segmentierung der Leuchtdioden in getrennt (vorzugsweise sogar unabhängig) voneinander steuer- bzw. regelbare Gruppen kann gleichbleibend sein oder variabel, beispielsweise durch einen Anwender und/oder automatisch auf Grundlage eines oder mehrerer Prozessparameter einstellbar. Sie kann z.B. auf einer Anordnung mehrerer Leuchtdioden auf einer Platine beruhen. So können beispielsweise Leuchtdioden, die an Randbereichen einer Platine der Aktivierungsvorrichtung angeordnet sind, eine erste Gruppe von Leuchtdioden bilden, und Leuchtdioden in einem zentralen Bereich der Platine können eine zweite Gruppe von Leuchtdioden bilden. Alternativ oder zusätzlich kann eine Einteilung der Leuchtdioden (ggf. in Untergruppen) danach erfolgen, in welche Richtung die Leuchtdioden jeweils Strahlung abgeben, ob sie beispielsweise dazu eingerichtet sind, auf verlegte oder zu verlegende Faserhalbzeug-Bändchen gerichtet zu werden oder auf den Verlegungsuntergrund. Die Leuchtdioden der verschiedenen (Unter-) Gruppen können dann separat, vorzugsweise unabhängig voneinander steuer- bzw. regelbar sein.

Vermöge einer (Unter-)Segmentierung in Längsrichtung des mindestens einen zugeführten Faserhalbzeug-Bändchens, bei der also entlang einem (ggf. jedem oder mehrerer) Faserhalbzeug-Bändchen in Längsrichtung verschiedene Gruppen steuer- bzw. regelbarer Leuchtdioden angeordnet sind, können Heizprofile und/oder Temperaturrampen einstellbar sein. Beispielsweise können auf diese Weise Leuchtdioden, die bei bestimmungsgemäßer Verwendung der Aktivierungsvorrichtung näher an einer als Kompaktierelement ausgebildeten Kompaktierrolle angeordnet werden, eine andere Gruppe ausbilden als Leuchtdioden, die entsprechend weiter entfernt von der Kompaktierrolle angeordnet werden. Damit kann z.B. bei der erstgenannten Gruppe eine niedrigere Heizleistung eingestellt werden als bei der zweitgenannten Gruppe, so dass ein Bereich des mindestens einen Faserhalbzeug-Bändchens, der später von der Kompaktierrolle erfasst wird als ein anderer Bereich, (zunächst) stärker erwärmt wird. So kann eine Abkühlung während des Abrollens der Kompaktierrolle ausgeglichen werden.

Gemäß einer vorteilhaften Ausführungsvariante ist eine erfindungsgemäße Aktivierungseinheit dazu eingerichtet, in einen relativ zu einem Verlegungsuntergrund bewegbaren Legekopf einer Vorrichtung zum Herstellen eines faserverstärkten Kunststofflaminats integriert bzw. an einem derartigen Legekopf befestigt zu werden. Der Legekopf ist dabei dazu eingerichtet, das mindestens eine Faserhalbzeug-Bändchen auf dem Verlegungsuntergrund automatisch abzurollen und so sukzessive zu platzieren.

Die mindestens eine Leuchtdiode der Aktivierungsvorrichtung kann dazu eingerichtet sein, den zu erwärmenden Abschnitt bzw. den Verlegungsuntergrund für das mindestens eine Faserhalbzeug-Bändchen unmittelbar, also ohne dazwischenliegendes Medium zu bestrahlen.

Gemäß einer alternativen Ausführungsform umfasst eine erfindungsgemäße Aktivierungsvorrichtung mindestens eine optische Komponente , die dazu eingerichtet ist, von der mindestens einen Leuchtdiode emittierte Strahlung zwischen der mindestens einen Leuchtdiode und dem Abschnitt
und/oder zwischen der mindestens einen Leuchtdiode und einem von ihr bestrahlten Verlegungsuntergrund für das mindestens eine Faserhalbzeug-Bändchen zu beeinflussen, beispielsweise zu brechen, zu richten, zu fokussieren, umzulenken, zu spalten oder Ähnliches. Derartige optische Komponenten können beispielsweise ein oder mehrere beispielsweise Spiegel, Lichtleiter, Linse(n), Prisma/en und/oder Blende/n sein.

Eine vorteilhafte Ausführungsform eines erfindungsgemäßen Verfahrens umfasst analog ein Durchleiten von Strahlung durch mindestens eine optische Komponente zwischen der mindestens einen Leuchtdiode und dem Abschnitt des mindestens einen Faserhalbzeug-Bändchens und/oder zwischen der mindestens einen Leuchtdiode und einem von ihr bestrahlten Verlegungsuntergrund für das mindestens eine Faserhalbzeug-Bändchen.

Auf diese Weise kann die emittierte Strahlung in besonders geeigneter Weise auf den mindestens einen Abschnitt des mindestens einen Faserhalbzeug-Bändchens bzw. den Verlegungsuntergrund gerichtet und so eine optimale Erwärmung und damit Binderaktivierung erreicht werden. Insbesondere kann die Bestrahlung präzise ausgerichtet und damit geregelt werden, so dass beispielsweise auch nebeneinanderliegende Faserhalbzeug-Bändchen unterschiedlich und (mindestens weitgehend) überlappungsfrei bestrahlt werden können.

Besonders vorteilhaft ist eine Ausführungsform, bei der eine derartige optische Komponente mindestens eine Fresnel-Linse umfasst; eine Aktivierungsvorrichtung mit einer derartigen Linse ist aufgrund deren geringen Gewichts und Volumens besonders kompakt und gut integrierbar.

Gemäß einer vorteilhaften Ausführungsvariante umfasst eine erfindungsgemäße Aktivierungsvorrichtung einen Lichtleiter, der dazu eingerichtet ist, Strahlung (bzw. Strahlungsenergie) der mindestens einen Leuchtdiode an den (zu erwärmenden) Abschnitt und/oder an den (zu erwärmenden) Verlegungsuntergrund zu übertragen; in diesem Falle erwärmt die mindestens einen Leuchtdiode den besagten Abschnitt bzw. Verlegungsuntergrund also mittelbar. Ein erfindungsgemäßes Verfahren kann analog ein Einspeisen von Strahlung der mindestens einen Leuchtdiode in einen Lichtleiter und ein Zuleiten der Strahlungsenergie durch den Lichtleiter zu dem Abschnitt des Faserhalbzeug-Bändchens und/oder zu dem Verlegungsuntergrund umfassen.
Derartige Ausführungsformen ermöglichen insbesondere ein Anordnen der mindestens einen Leuchtdiode in räumlicher Entfernung von einer Zufuhreinrichtung und einem Kompaktierelement, beispielsweise außerhalb eines formbildenden Werkzeugs. Die mindestens eine Leuchtdiode ist dadurch geschützter und weniger anfällig z.B. gegen Verschmutzung. Darüber hinaus ist sie leichter zu warten.

Die Aktivierungsvorrichtung kann weiterhin einen Austrittskörper für die Strahlung umfassen, der an einen Lichtleiter (vorzugsweise lösbar) angeschlossen und/oder anschließbar sein kann und der vorzugsweise dazu eingerichtet ist, Strahlung vom Lichtleiter zu übernehmen und an die Umgebung abzugeben. Ein derartiger Austrittskörper kann vorzugsweise in seiner räumlichen Gestalt an eine Form des Kompaktierelements (z.B. einer Kompaktierrolle) und/oder eines jeweils herzustellenden faserverstärkten Kunststofflaminats angepasst sein. Dadurch kann eine besonders gute und energieeffiziente Erwärmung erreicht werden. Der Austrittskörper kann Mikrolinsen in seinem Inneren umfassen. Dadurch lässt sich ein Austritt der Strahlung genau steuern.

Der Lichtleiter und/oder ein ggf. daran angeschlossener oder anschließbarer Austrittskörper kann/können segmentiert sein, so dass an verschiedenen Stellen jeweils Strahlung unterschiedlicher Intensität aus dem Lichtleiter bzw. Austrittskörper austritt. So kann der Lichtleiter (bzw. Austrittskörper) beispielsweise dazu eingerichtet sein, in Richtung des mindestens einen Faserhalbzeug-Bändchens Strahlung einer ersten Intensität zu übertragen und/oder zu emittieren und in Richtung des Verlegungsuntergrundes Strahlung einer zweiten, von der ersten verschiedenen Intensität zu emittieren. Alternativ oder zusätzlich kann der Lichtleiter (bzw. ein Austrittskörper) in Längsrichtung des mindestens einen zugeführten Faserhalbzeug-Bändchens Strahlung unterschiedlicher Intensität emittieren, so dass ein geeignetes Heizprofil eingerichtet sein bzw. werden kann.

Insbesondere kann der Austrittskörper so segmentiert sein, dass Strahlung je nach einem Bereich, in dem sie in den Austrittskörper eingespeist wird, gezielt auf einen Abschnitt eines (einzelnen) oder mehrerer Faserhalbzeug-Bändchen und/oder auf den Verlegungsuntergrund gelenkt werden kann.

Ein erfindungsgemäßes Verfahren kann Teil eines automatisierten Schichtlegeprozesses sein, beispielsweise eines sogenannten AFP, DFP und/oder ATL-Prozesses. Alternativ kann ein automatisiertes Aufbringungsverfahren von (zusätzlichen) unidirektionalen Schichten auf ein Flechtbauteil ein erfindungsgemäßes Verfahren umfassen.

Im Folgenden werden bevorzugte Ausführungsbeispiele der Erfindung anhand von Zeichnungen näher erläutert. Es versteht sich, dass die schematisch dargestellten einzelnen Elemente und Komponenten auch anders kombiniert und/oder ausgebildet sein können als gezeigt und dass das erfindungsgemäße Verfahren nicht auf die gezeigte Ausführungsvariante beschränkt ist.

Es zeigen schematisch:
- Figur 1:: eine exemplarische erfindungsgemäße Vorrichtung zum Herstellen eines faserverstärkten Kunststofflaminats;
- Figur 2:: eine Aktivierungsvorrichtung gemäß einer beispielhaften Ausführungsform der vorliegenden Erfindung in Verwendung;
- Figur 3a, 3b:: Ansichten einer möglichen Bestrahlung von Faserhalbzeug-Bändchen mittels einer beispielhaften erfindungsgemäßen Aktivierungsvorrichtung; und
- Figur 4:: eine Aktivierungsvorrichtung gemäß einer weiteren beispielhaften Ausführungsform der vorliegenden Erfindung in Verwendung.

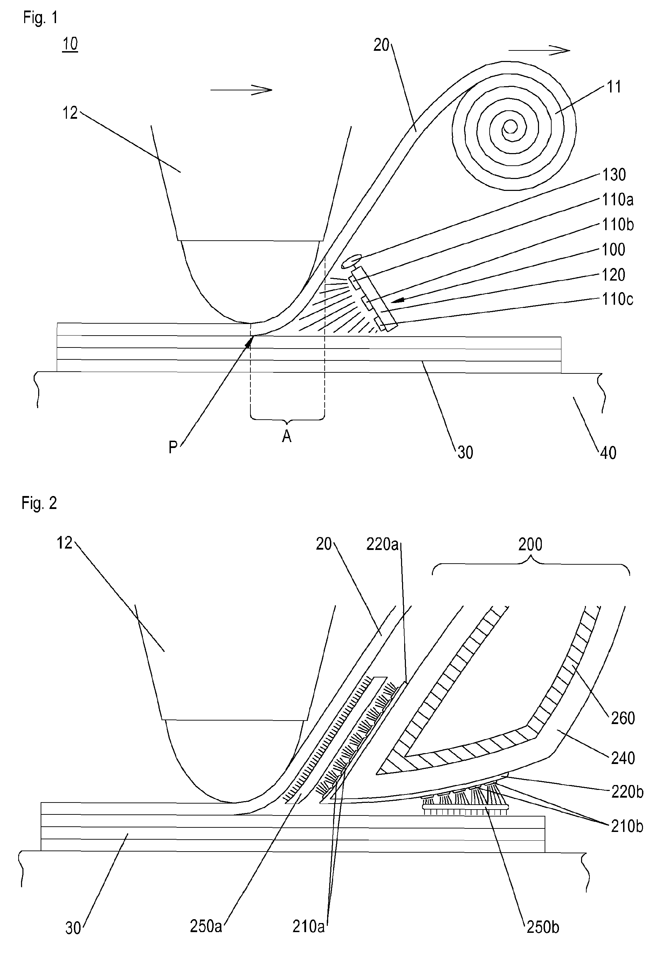

In Figur 1 ist eine erste exemplarische erfindungsgemäße Vorrichtung 10 zum Herstellen eines faserverstärkten Kunststofflaminats dargestellt. Die Vorrichtung umfasst eine Zufuhreinrichtung 11 zum Zuführen mindestens eines Faserhalbzeug-Bändchens 20 auf einen Verlegungsuntergrund 30. Aufgrund der schematischen Seitenansicht der Vorrichtung ist in der Figur 1 nur ein einzelnes Faserhalbzeug-Bändchen zu sehen; gemäß einer vorteilhaften Ausführungsform werden von der Zufuhreinrichtung 11 mehrere parallel verlaufende Faserhalbzeug-Bändchen nebeneinander dem Verlegungsuntergrund 30 zugeführt. In der dargestellten Situation ist der Verlegungsuntergrund des (oder der) aktuell verlegten Faserhalbzeug-Bändchen/s 20 eine zuvor verlegte Schicht von Faserhalbzeug-Bändchen; in einer anderen Situation könnte der Untergrund ein formbildendes Werkzeug 40 und/oder ein Substrat (nicht dargestellt) sein.

Die die Zufuhreinrichtung 11 ist vorzugsweise dazu eingerichtet, sich relativ zum Verlegungsuntergrund 30 in Pfeilrichtung zu bewegen, um das Faserhalbzeug-Bändchen sukzessive dem Verlegungsuntergrund 30 zuzuführen, insbesondere auf ihm abzulegen. In der Figur ist die Zufuhreinrichtung 11 schematisch als Abwickelrolle dargestellt, von der das mindestens eine Faserhalbzeug-Bändchen bei der genannten Bewegung abgewickelt wird.

Die Vorrichtung 10 weist zudem ein Kompaktierelement 12 zum abschnittsweisen Andrücken des mindestens einen Faserhalbzeug-Bändchens an dem Verlegungsuntergrund auf. Auch das Kompaktierelement 12 ist vorzugsweise dazu eingerichtet, sich relativ zum Verlegungsuntergrund 30 in Pfeilrichtung zu bewegen. Damit kann das mindestens eine zugeführte und abgelegte Faserhalbzeug-Bändchen abschnittsweise, also nach und nach an den Verlegungsuntergrund gedrückt werden.

Bevor ein Abschnitt A des Faserhalbzeug-Bändchens vom Kompaktierelement 12 derart am Verlegungsuntergrund angedrückt wird, wird er durch eine Aktivierungsvorrichtung 100 erwärmt; auf diese Weise wird ein Bindermaterial im Faserhalbzeug-Bändchen aktiviert und damit eine Klebrigkeit des Faserhalbzeug-Bändchens erzeugt, aufgrund deren das Faserhalbzeug-Bändchen an dem Verlegungsuntergrund anhaftet und insbesondere nicht verrutscht.

Die Aktivierungsvorrichtung 100 umfasst im dargestellten Beispiel eine Platine 120, auf die Leuchtdioden 110a, 110b, 110c montiert sind. Im dargestellten Beispiel sind die Leuchtdioden 110a, 110b, 110c insbesondere bzw. im Wesentlichen auf den Kontaktpunkt P (bzw. eine durch ihn verlaufende Gerade senkrecht zur Darstellungsebene) gerichtet, an dem das zugeführte mindestens eine Faserhalbzeug-Bändchen den Verlegungsuntergrund soeben berührt. Die Aktivierungsvorrichtung mit den Leuchtdioden 110a, 110b, 110c bestrahlt dabei den Abschnitt A des mindestens einen Faserhalbzeug-Bändchens 20 und erwärmt ihn so direkt, ehe er von dem Kompaktierelement 12 am Verlegungsuntergrund angedrückt wird. Darüber hinaus wird der Abschnitt indirekt dadurch erwärmt, dass die Aktivierungsvorrichtung 100 auch einen Bereich des Verlegungsuntergrundes 30 bestrahlt, dessen Wärme dann insbesondere nach dem Auflegen des Abschnitts des Faserhalbzeug-Bändchens auf dieses abstrahlt.

Die in der Figur 1 dargestellte Aktivierungsvorrichtung 100 weist zudem eine Temperatur-Messvorrichtung 130 zum Erfassen einer Temperatur des erwärmten Abschnitts A auf. Im vorliegenden Beispiel ist die Temperatur-Messvorrichtung 130 beispielsweise ein auf den Bereich A gerichtetes Pyrometer zum berührungslosen Erfassen der Temperatur. Vorzugsweise umfasst die Aktivierungsvorrichtung 100 eine (nicht gezeigte) Regelungseinheit, mit der die Leuchtdioden anhand einer oder mehrerer derart erfasster Temperaturen geregelt werden können; eine derartige Regelung umfasst vorzugsweise ein Vergleichen mindestens eines erfassten Wertes mit einem oder mehreren Sollwert(en).

Besonders bevorzugt ist eine Ausführungsform, bei der die Leuchtdioden 110a, 110b, 110c einzeln und/oder in Gruppen gesteuert oder geregelt werden können. So könnten beispielsweise in Abhängigkeit von einer erfassten Temperatur die Strahlungsleistungen der Leuchtdioden 110a, 110b und 110c unabhängig voneinander einstellbar sein. Sofern die Aktivierungsvorrichtung 100 (z.B. senkrecht zur Darstellungsebene) weitere Leuchtdioden in analogen Positionen aufweist, könnten beispielsweise entlang einer Gerade senkrecht zur Bändchenrichtung angeordnete Leuchtdioden jeweils zu einer gemeinsam steuer- oder regelbaren Gruppe zusammengefasst werden. Insbesondere könnten damit beispielsweise Leuchtdioden, die (wie die Leuchtdiode 110c in der Darstellung) ausschließlich den Verlegungsuntergrund bestrahlen, anders eingestellt werden als Leuchtdioden, die ausschließlich das mindestens eine zu verlegende Faserhalbzeug-Bändchen (wie in der Darstellung die Leuchtdiode 110a) und/oder als Leuchtdioden, die sowohl das zu verlegende Faserhalbzeug-Bändchen als auch den Verlegungsuntergrund bestrahlen (wie in der Darstellung die Leuchtdiode 110b). Es versteht sich, dass andere Segmentierungen alternativ möglich sind.

In Figur 2 ist eine Aktivierungsvorrichtung 200 gemäß einer alternativen Ausführungsform in Verwendung dargestellt; die Aktivierungsvorrichtung 200 erwärmt dabei einen Abschnitt eines Faserhalbzeug-Bändchens 20, das auf einem Verlegungsuntergrund 30 abgelegt und dort wie im in der Figur 1 dargestellten Vorgehen von einem Kompaktierelement 12 angedrückt wird.

Die Aktivierungseinheit 200 umfasst Platinen 220a, 220b, die jeweils an einer Oberfläche eines Grundkörpers 240 der Aktivierungseinheit 200 angeordnet sind und auf denen jeweils eine Mehrzahl an Leuchtdioden 210, 210b angeordnet ist. Ein Teil der Leuchtdioden (nämlich die mit 210a bezeichneten) ist auf einen zugeführten, zu verlegenden Abschnitt des Faserhalbzeug-Bändchens 20 gerichtet, um diesen zu erwärmen. Ein anderer Teil der Leuchtdioden (nämlich die mit 210b bezeichneten) ist hingegen auf den Verlegungsuntergrund gerichtet und erwärmt den Abschnitt des Faserhalbzeug-Bändchens somit indirekt, indem die in den Verlegungsuntergrund eingebrachte Wärme nach dem Aufbringen des Abschnitts des Faserhalbzeug-Bändchens in diesen abstrahlt. Vorzugsweise sind die Leuchtdioden individuell oder in gruppenweise steuer- oder regelbar (wie oben erläutert).

Innerhalb der Aktivierungseinheit 200 ist ein Kühlsystem 260 angeordnet, das von einem Kühlmedium durchströmt wird. So kann Verlustwärme der Leuchtdiode(n) abgeführt werden.

Die Aktivierungseinheit 200 umfasst weiterhin zwei optische Komponenten 250a, 250b, die im gezeigten Fall jeweils Linsen sind. Die optische Komponente 250a ist dabei zwischen der Aktivierungsvorrichtung und dem zu erwärmenden bzw. bestrahlten Abschnitt des Faserhalbzeug-Bändchens angeordnet und die optische Komponente 250b zwischen der mindestens einen Leuchtdiode und dem von ihr bestrahlten Verlegungsuntergrund 30 für das mindestens eine Faserhalbzeug-Bändchen. In beiden Fällen ist die optische Komponente dazu eingerichtet, von der mindestens einen Leuchtdiode emittierte Strahlung zu beeinflussen, beispielsweise zu brechen und/oder zu fokussieren. Dadurch kann eine besonders vorteilhafte Bestrahlung und damit Erwärmung erreicht werden, die eine entsprechende Binderaktivierung und damit Anhaftung des Faserhalbzeug-Bändchens am Verlegungsuntergrund bewirkt.

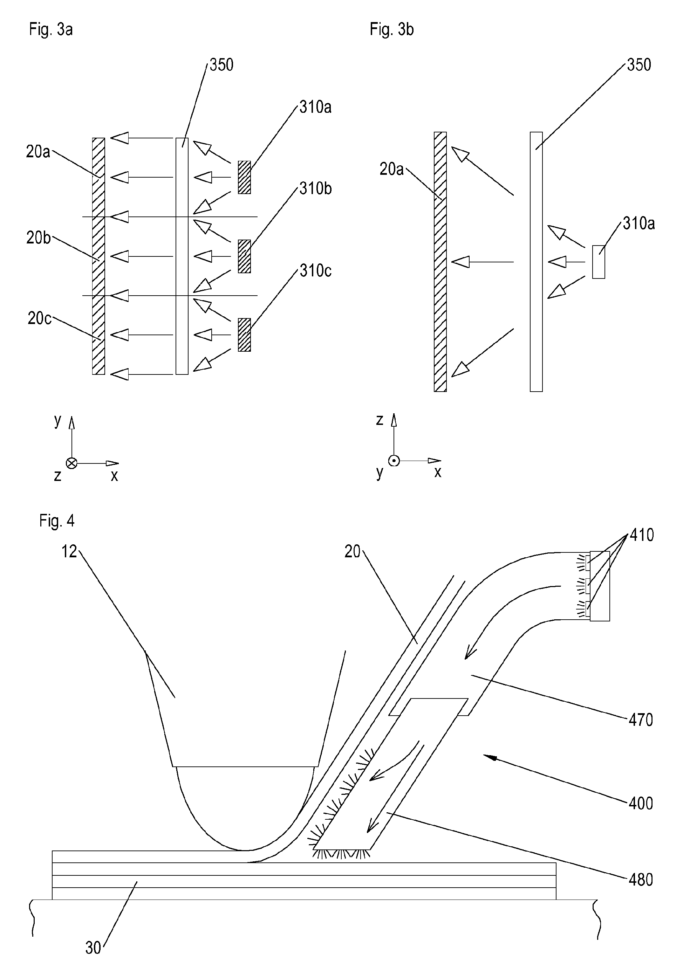

In den Figuren 3a und 3b sind in zwei verschiedenen Perspektiven mögliche Strahlungswege von Strahlung skizziert, die von Leuchtdioden 310a, 310b, 310c auf jeweilige Abschnitte parallel verlaufender Faserhalbzeug-Bändchen 20a, 20b, 20c emittiert wird. Die unterschiedlichen Perspektiven sind in den Figuren durch jeweils angezeigte (x, y, z)-Koordinatensysteme kenntlich gemacht.

In der Figur 3a sind die Faserhalbzeug-Bändchen 20a, 20b, 20c in einem Querschnitt zu sehen. Jedes der Faserhalbzeug-Bändchen 20a, 20b, 20c wird von einer ihm zugeordneten Leuchtdiode 310a, 310b, 310c bestrahlt und so erwärmt. Die Strahlung wird jeweils durch eine optische Komponente 350 (beispielsweise eine Fresnel-Linse) geleitet, welche die Strahlung im vorliegenden Fall parallel so bricht und damit ausrichtet, dass Überlappungen der Strahlung der verschiedenen Leuchtdioden verhindert werden.

Wie in der Figur 3a zu erkennen ist, erfolgt die Brechung bezüglich einer Ausbreitung der Strahlung, die in einer Ebene orthogonal zu einer Längsrichtung der Faserhalbzeug-Bändchen verläuft (in der Darstellung liegt eine derartige Ausbreitung in der (x,y)-Ebene, die in der Figur 3a die Darstellungsebene ist). In der Figur 3b ist demgegenüber zu sehen, dass hinsichtlich einer Ausbreitung, die in einer Ebene parallel zur Längsrichtung der Faserhalbzeug-Bändchen verläuft, keine Brechung durch die optische Komponente 350 erfolgt, so dass sich die Strahlung entlang den Faserhalbzeug-Bändchen (von denen in der Figur 3b aufgrund der Perspektive nur das Faserhalbzeug-Bändchen 20a zu sehen ist) ausbreitet; die genannte Ebene ist in diesem Fall in der Darstellung der Figur 3b als (x,z)-Ebene bezeichnet.

Durch die optische Komponente 350 mit ihrer Brechung gemäß den Figuren 3a, 3b wird somit eine Bestrahlung und damit Erwärmung der Faserhalbzeug-Bändchen 20a, 20b, 20c ermöglicht, die im Wesentlichen überlappungsfrei (und damit über die jeweiligen Leuchtdioden 310a, 310b, 310c besonders gut kontrollierbar, insbesondere steuer- bzw. regelbar) ist und die gleichwohl jeweils vorteilhaft einen größeren Abschnitt der Faserhalbzeug-Bändchen 20a, 20b, 20c erreicht.

In Figur 4 ist eine Aktivierungsvorrichtung 400 gemäß einer weiteren beispielhaften Ausführungsform der vorliegenden Erfindung in Verwendung dargestellt. Analog zu den Vorgehen, die in den Figuren 1 und 2 dargestellt sind, erwärmt dabei die Aktivierungsvorrichtung 400 einen Abschnitt eines Faserhalbzeug-Bändchens 20, das auf einem Verlegungsuntergrund 30 abgelegt und dort von einem Kompaktierelement 12 angedrückt wird.

Die Aktivierungseinheit 400 umfasst einen Lichtleiter 470, einen Austrittskörper 480 und eine Mehrzahl an Leuchtdioden 410. Die Leuchtdioden 410 sind in der gezeigten Ausführungsform räumlich getrennt von dem Ort angeordnet, dem das mindestens eine Faserhalbzeug-Bändchen 20 auf dem Verlegungsuntergrund 30 zugeführt wird (beispielsweise können die Leuchtdioden 410 außerhalb eines formbildenden Werkzeugs positioniert sein, in dem das mindestens eine Faserhalbzeug-Bändchen auf dem Verlegungsuntergrund abgelegt wird). Die von den Leuchtdioden 410 emittierte Strahlung wird in den Lichtleiter 470 eingespeist und von diesem dem Austrittskörper 480 zugeführt, der während der gezeigten Verwendung mindestens teilweise zwischen dem zu verlegenden Faserhalbzeug-Bändchen und dem Verlegungsuntergrund 30 angeordnet wird. Von den Leuchtdioden 410 emittierte und durch den Lichtleiter 470 geleitete Strahlung kann aus dem Austrittskörper 480 austreten und wird im dargestellten Beispiel sowohl auf einen zu erwärmenden Abschnitt des Faserhalbzeug-Bändchens 20 als auch auf einen Bereich des Verlegungsuntergrundes geworfen.

Der Austrittskörper kann dabei in seinem Inneren Mikrolinsen umfassen, mit denen sich ein Austritt der Strahlung genau steuern lässt. Insbesondere kann der Austrittskörper so segmentiert sein, dass Strahlung je nach einem Bereich, in dem sie in den Austrittskörper eingespeist wird, gezielt auf einen Abschnitt eines (einzelnen) oder mehrerer Faserhalbzeug-Bändchen und/oder auf den Verlegungsuntergrund 30 gelenkt werden kann.

Vorzugsweise umfasst der Lichtleiter 470 eine Mehrzahl von Bündeln, die jeweils einem Faserhalbzeug-Bändchen 20 und/oder einer Oberfläche des Austrittskörpers so zugeordnet sind, dass durch ein entsprechendes Bündel geleitete Strahlung ein zugeordnetes Faserhalbzeug-Bändchen 20 trifft bzw. in eine zugeordnete Oberfläche des Austrittskörpers eintritt (um dann aus einer weiteren zugeordneten Oberfläche des Austrittskörpers auszutreten).

Bezugszeichen
- 10: Vorrichtung zum Herstellen eines faserverstärkten Kunststofflaminats
- 11: Zufuhreinrichtung
- 12: Kompaktierelement
- 20, 20a, 20b, 20c: Faserhalbzeug-Bändchen
- 30: Verlegungsuntergrund
- 40: formgebendes Werkzeug

- 100: Aktivierungsvorrichtung
- 110a, 110b, 110c: Leuchtdioden
- 120: Platine
- 130: Temperatur-Messvorrichtung

- 200: Aktivierungsvorrichtung
- 210a, 210b: Leuchtdioden
- 220a, 220b: Platinen
- 240: Grundkörper der Aktivierungseinheit
- 250a, 250b: optische Komponenten
- 260: Kühlsystem

- 310a, 310b, 310c: Leuchtdioden
- 350: optische Komponente

- 400: Aktivierungsvorrichtung
- 410: Leuchtdioden
- 470: Lichtleiter
- 480: Austrittskörper

- A: zu erwärmender Abschnitt eines Faserhalbzeug-Bändchens
- P: Kontaktpunkt P von zugeführtem Faserhalbzeug-Bändchen und Verlegungsuntergrund

## Patentansprüche

1. Aktivierungsvorrichtung (100, 200, 400) zur Binderaktivierung beim Herstellen eines faserverstärkten Kunststofflaminats, wobei die Aktivierungsvorrichtung mindestens eine Leuchtdiode (110a, 110b, 110c, 210a, 210b, 310a, 310b, 310c, 410) zum Erwärmen eines Abschnitts (A) mindestens eines Faserhalbzeug-Bändchens (20, 20a, 20b, 20c) aufweist.

2. Aktivierungsvorrichtung gemäß Anspruch 1, die eine Temperatur-Messvorrichtung (130) zum Erfassen einer Temperatur des erwärmten Abschnitts (A) und/oder der Aktivierungsvorrichtung und/oder eines erwärmten Verlegungsuntergrundes (30)umfasst.

3. Aktivierungsvorrichtung gemäß Anspruch 2, wobei die mindestens eine Leuchtdiode dazu eingerichtet ist, mehrere gleichzeitig nebeneinander verlegte Faserhalbzeug-Bändchen in einem Abschnitt zu erwärmen, und wobei die Temperatur-Messvorrichtung (130) dazu eingerichtet ist, für die mehreren Faserhalbzeug-Bändchen die Temperatur des erwärmten Abschnitts einzeln oder in Gruppen separat zu erfassen.

4. Aktivierungsvorrichtung gemäß einem der vorhergehenden Ansprüche, die eine Steuerungs- und/oder Regelungseinheit für die Leuchtdiode/n (110a, 110b, 110c, 210a, 210b, 310a, 310b, 310c, 410) umfasst.

5. Aktivierungsvorrichtung gemäß Anspruch 4, die eine Mehrzahl an Leuchtdioden aufweist, und wobei die Steuerungs- bzw. Regelungseinheit dazu eingerichtet ist, die Leuchtdioden einzeln und/oder gruppenweise anzusteuern bzw. zu regeln.

6. Aktivierungsvorrichtung gemäß einem der vorhergehenden Ansprüche, die einen Lichtleiter (470) umfasst, der dazu eingerichtet ist, Strahlung der mindestens einen Leuchtdiode (410) an den zu erwärmenden Abschnitt zu übertragen.

7. Aktivierungsvorrichtung gemäß einem der vorhergehenden Ansprüche, die mindestens eine optische Komponente (250a, 250b, 350) umfasst, die dazu eingerichtet ist, von der mindestens einen Leuchtdiode emittierte Strahlung zwischen der mindestens einen Leuchtdiode und dem Abschnitt und/oder zwischen der mindestens einen Leuchtdiode und einem von ihr bestrahlten Verlegungsuntergrund (30) für das mindestens eine Faserhalbzeug-Bändchen zu beeinflussen.

8. Aktivierungsvorrichtung gemäß einem der vorhergehenden Ansprüche, die dazu eingerichtet ist, in einen relativ zu einem Verlegungsuntergrund bewegbaren Legekopf einer Vorrichtung zum Herstellen eines faserverstärkten Kunststofflaminats integriert zu werden.

9. Vorrichtung (10) zum Herstellen eines faserverstärkten Kunststofflaminats, die aufweist:
eine Zufuhreinrichtung (11) zum Zuführen mindestens eines Faserhalbzeug-Bändchens (20, 20a, 20b, 20c) auf einen Verlegungsuntergrund (30);
eine Aktivierungsvorrichtung (100, 200, 400) gemäß einem der vorhergehenden Ansprüche; und
ein Kompaktierelement (12) zum Andrücken des erwärmten Abschnitts des Faserhalbzeug-Bändchens an dem Verlegungsuntergrund.

10. Verfahren zum Herstellen eines faserverstärkten Kunststofflaminats, das ein automatisiertes Verlegen mindestens eines Faserhalbzeug-Bändchens (20, 20a, 20b, 20c) auf einem Verlegungsuntergrund (30),
ein Erwärmen mindestens eines Abschnitts (A) des Faserhalbzeug-Bändchens sowie ein Anpressen des erwärmten Abschnitts des Faserhalbzeug-Bändchens auf dem Verlegungsuntergrund (30) umfasst,
wobei das Erwärmen des Abschnitts mittels einer oder mehrerer Leuchtdiode/n (110a, 110b, 110c, 210a, 210b, 310a, 310b, 310c, 410) einer Aktivierungsvorrichtung (100, 200, 400) erfolgt.

11. Verfahren gemäß Anspruch 10, das ein Erfassen einer Temperatur des erwärmten Abschnitts und/oder des Verlegungsuntergrundes (30) und/oder der Aktivierungsvorrichtung, insbesondere der mindestens einen Leuchtdiode umfasst.

12. Verfahren gemäß Anspruch 11, wobei zwei oder mehr Faserhalbzeug-Bändchen (20, 20a, 20b, 20c) gleichzeitig im Wesentlichen parallel auf dem Verlegungsuntergrund (30) verlegt werden und wobei die Temperatur des erwärmten Abschnitts für jedes Faserhalbzeug-Bändchen separat erfasst wird.

13. Verfahren gemäß einem der Ansprüche 8 bis 10, das ein Steuern oder Regeln der Leuchtdiode/n einzeln und/oder gruppenweise umfasst.

14. Verfahren gemäß einem der Ansprüche 10 bis 13, wobei das Erwärmen ein Einspeisen von Strahlung der mindestens einen Leuchtdiode in einen Lichtleiter (470) und ein Zuleiten der Strahlungsenergie durch den Lichtleiter zu dem Abschnitt des Faserhalbzeug-Bändchens umfasst.

15. Verfahren gemäß einem der Ansprüche 10 bis 14, wobei das Erwärmen ein Durchleiten von Strahlung durch mindestens eine optische Komponente (250a, 250b, 350)zwischen der Aktivierungsvorrichtung (100, 200 400) und dem Abschnitt und/oder zwischen der mindestens einen Leuchtdiode und einem von ihr bestrahlten Verlegungsuntergrund (30) für das mindestens eine Faserhalbzeug-Bändchen umfasst.
